# EUROPEAN PATENT SPECIFICATION

(11) **EP 3 067 791 B1**
(45) Date of publication and mention of the grant of the patent: **04.03.2020**
(21) Application number: 14877122.3
(22) Date of filing: 29.12.2014
(51) Int. Cl.: G06F 3/048, G06F 3/03, G06F 3/0482, G06F 3/0486

(54) **DISPLAY DEVICE AND METHOD FOR CONTROLLING SAME**
ANZEIGEVORRICHTUNG UND VERFAHREN ZUR STEUERUNG DAVON
DISPOSITIF D'AFFICHAGE ET SON PROCÉDÉ DE COMMANDE

(30) Priority: 03.01.2014 KR 20140000545
(43) Date of publication of application: 14.09.2016
(73) Proprietor: Samsung Electronics Co., Ltd., Gyeonggi-do 16677 (KR)
(72) Inventor: KIM, Min-jin, Pyeongtaek-si Gyeonggi-do 450-760 (KR); MOON, Jong-bo, Suwon-si Gyeonggi-do 443-811 (KR); JUNG, Do-sung, Seoul 138-848 (KR); CHO, Sung-hee, Seoul 135-786 (KR); CHOI, Yun-hee, Seongnam-si Gyeonggi-do 463-969 (KR); HWANG, Je-sun, Bucheon-si Gyeonggi-do 420-851 (KR)
(74) Representative: Appleyard Lees IP LLP
(86) International application number: PCT/KR2014/012946
(87) International publication number: WO 2015/102326

(56) References cited:
- EP-A1- 2 884 378
- WO-A2-2012/030078
- WO-A2-2012/102592
- KR-A- 20080 094 200
- KR-A- 20130 101 728
- US-A1- 2011 109 544
- US-A1- 2013 246 955
- US-A1- 2013 246 955

## Description

### [Technical Field]

Apparatuses and methods consistent with the present invention relate to a display device and a method for controlling the same, and more particularly, to a display device and a method for controlling the same capable of providing a feedback UI to a region of a display item corresponding to a motion direction of an input device.

### [Background Art]

A display device may use a plurality of display items and a highlight to perform various functions. In particular, to perform various functions using the plurality of display items and the highlight, the existing display device uses a four-way button and an enter button to manipulate the highlight or uses a pointer to manipulate the highlight.

In detail, when manipulating the highlight using the four-way button and the enter button, the display device uses the four-way button to move the highlight and uses the enter button to select the display item on which the highlight is positioned. However, when the display device uses the four-way button and the enter button to manipulate the highlight, a user is less intuitive than manipulating the highlight using the pointer and has inconvenience of manipulation of pressing the button several times.

To position the highlight on the display item using the pointer, a precision manipulation is required. Therefore, it is inconvenient for the user to select the display item. In particular, when the user uses the pointer to move the display item, the case in which the highlight is moved in a direction different from the direction in which the user wants to move the display item may happen.

Therefore, a method for precisely manipulating, by a user, a display item using a pointer is required.

US 2013/0246955 discloses visual feedback for highlight-driven gesture user interfaces. EP 2,884,278 discloses a method and device for displaying pointing information. US2011/0109544 discloses displaying multiple icons and selecting one of the icons by moving a cursor.

### [Disclosure]

### [Technical Problem]

The present disclosure provides a display device and a method for controlling the same capable of providing a feedback UI to a region of a display item corresponding to a motion direction of an input device.

### [Technical Solution]

The invention is defined by the independent claims. Further aspects of the invention are outlined in the dependent claims. Embodiments relate only to claimed combinations of features. In the following, when the term "embodiment" relates to unclaimed combinations of features, said term has to be understood as referring to examples of the present invention.

According to an aspect of the present disclosure a method for controlling a display device includes: displaying a plurality of display items on a display screen; obtaining coordinates of a point indicated by an input device; displaying a highlight on a first display item positioned on the coordinates; when the point indicated by the input device is moved, determining a motion direction of the input device based on the obtained coordinates and coordinates of the moved point; and displaying a feedback UI in a region of the first display item corresponding to the determined motion direction of the input device.

In the displaying of the feedback UI, when the determined motion direction of the input device corresponds to one of up, down, left, and right directions, the feedback UI may be displayed on a face corresponding to the motion direction of the input device among four faces of the first display item.

In the displaying of the feedback UI, when the determined motion direction of the input device is a diagonal direction, the feedback UI may be displayed on two faces corresponding to the motion direction of the input device among four faces of the first display items.

In the displaying of the feedback UI, when the input device is rotated while the point indicated by the input device is maintained in the display item, the feedback UI may be displayed on four faces of the first display item.

In the displaying of the feedback UI, the larger the motion value of the input device, the larger the size of the feedback UI.

The method may further include: when the point indicated by the input device is moved beyond a preset value from the first display item, removing the feedback UI and moving the highlight from the first display item to a second display item positioned at the motion direction of the input device.

In the determining, a direction vector may be calculated based on the obtained coordinates and the coordinates of the moved point and then the motion direction of the input device may be determined based on the direction vector.

The method may further include: when the point indicated by the input device is positioned within a preset distance on one of four faces of the display screen, displaying a page changing UI on the face positioned within the preset distance.

The method may further include: when the point indicated by the input device contacts one of the four faces of the display screen, changing a page to a direction corresponding to the face contacting the point indicated by the input device.

The input device may be a remote controller including a motion sensor sensing a user motion.

According to another aspect of the present disclosure, a display device includes: a display displaying a plurality of display items on a display screen; a communicator receiving information on coordinates of a point indicated by an input device from the input device; and a controller obtaining the coordinates of the point indicated by the input device based on the information received through the communicator and controlling the display to display a highlight on a first display item positioned on the coordinates, when the point indicated by the input device is moved, determine a motion direction of the input device based on the obtained coordinates and coordinates of the moved point, and display a feedback UI in a region of the first display item corresponding to the determined motion direction of the input device.

When the determined motion direction of the input device corresponds to one of up, down, left, and right directions, the controller may control the display to display the feedback UI on a face corresponding to the motion direction of the input device among four faces of the first display items.

When the determined motion direction of the input device is a diagonal direction, the controller may control the display to display the feedback UI on two faces corresponding to the motion direction of the input device among four faces of the first display items.

When the input device is rotated while the point indicated by the input device is maintained in the display item, the controller may control the display to display the feedback UI on four faces of the first display item.

The controller may control the display to increase a size of the feedback UI as a motion value of the input device is getting increased.

The controller may remove the feedback UI and control the display to move the highlight from the first display item to a second display item positioned at the motion direction of the input device, when the point indicated by the input device is moved beyond a preset value from the first display item.

The controller may calculate a direction vector based on the obtained coordinates and the coordinates of the moved point and then determine the motion direction of the input device based on the direction vector.

The controller may control the display to display the page changing UI on the face positioned within the preset distance when the point indicated by the input deice is positioned within the preset distance on one of the four faces of the display screen.

The controller may change the page to the corresponding direction of the face that the point indicated by the input device contacts, when the point indicated by the input device contacts one of the four faces of the display screen.

The input device may be a remote controller including a motion sensor sensing the user motion.

### [Advantageous Effects]

As set forth above, according to various exemplary embodiments of the present invention, the user may intuitively determine the motion of the input device to more accurately perform the manipulation.

### [Description of Drawings]

FIG. 1 is a block diagram schematically illustrating a configuration of a display device according to an exemplary embodiment of the present invention;
FIG. 2 is a block diagram illustrating in detail the configuration of the display device according to the exemplary embodiment of the present invention;
FIGS. 3A to 3C are diagrams for describing a method for moving a highlight depending on a motion of an input device according to an exemplary embodiment of the present invention;
FIGS. 4A to 4C are diagrams for describing a method for providing a feedback UI depending on a motion of an input device according to an exemplary embodiment of the present invention;
FIGS. 5A to 5C are diagrams for describing a method for providing a feedback UI depending on a diagonal motion of an input device according to an exemplary embodiment of the present invention;
FIGS. 6A and 6B are diagrams for describing a method for providing a feedback UI depending on a rotational motion of an input device according to an exemplary embodiment of the present invention;
FIGS. 7A to 7C are diagrams for describing a method for providing a page changing UI according to an exemplary embodiment of the present invention; and
FIG. 8 is a flow chart for describing a method for controlling a display device according to an exemplary embodiment of the present invention.

### [Best Mode]

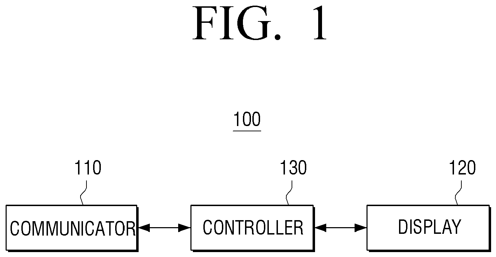

Hereinafter, exemplary embodiments of the present invention will be described in more detail with reference to the accompanying drawings. FIG. 1 is a block diagram schematically illustrating a configuration of the display device 100 according to the exemplary embodiment of the present invention. As illustrated in FIG. 1, the display device 100 includes a communicator 110, a display 120, and a controller 130. Meanwhile, the display device 100 may be a display device such as a smart T, which is only an example. Therefore, the display device may be implemented as display devices such as a desktop PC, a tablet PC, and a smart phone.

The communicator 110 communicates with external input devices. In this case, the communicator 110 may receive at least one of motion information and a button select command of the input device from the input device. Further, the communicator 110 may receive information on coordinates of a point currently indicated by the input device from the input device. In this case, the input device may be implemented as a remote controller including a motion sensor that may sense a user motion, but is not limited thereto. Therefore, the input device may be implemented as other input devices such as a pointing device including a motion sensor.

The display 120 displays image data depending on a control of the controller 130. In particular, the display 120 may display a plurality of display items and may display a highlight on one of the plurality of display items at the point indicated by the input device.

The controller 130 controls the general functions of the display device 100. In detail, the controller 130 may obtain the coordinates of the point indicated by the input device based on the information received through the communicator 110 and may control the display 120 to display the highlight on a first display item positioned at the coordinates. Further, when the point indicated by the input device is moved, the controller 130 may determine the motion direction of the input device based on the obtained coordinates and the coordinates of the moved point and may control the display 120 to display the feedback UI in the region of the first display item corresponding to the determined motion direction of the input device. In this case, the feedback UI may be a visual feedback like being extended into shapes (for example, arch or quadrangle) preset at an outside of at least one face corresponding to the motion direction of the input device among four faces of the display item.

In detail, the controller 130 may calculate a direction vector based on the obtained coordinates and the coordinates of the moved point and then determine the motion direction and a motion amount of the input device based on a direction and a size of the direction vector. That is, the controller 130 may calculate the direction vector based on the obtained coordinates as a starting point and the moved point as an ending point.

Further, when the motion direction of the input device corresponds to one of up, down, left, and right directions, the controller 130 may control the display 120 to display the feedback UI on the face corresponding to the motion direction of the input device among four faces of the first display item. For example, when the motion direction of the input device is a right direction, the controller 130 may control the display 120 to display the feedback UI on a right face of the first display item.

Further, when the determined motion direction of the input device is a diagonal direction, the controller 130 may control the display 120 to display the feedback UI on two faces corresponding to the motion direction of the input device among four faces of the first display item. For example, when the motion direction of the input device is a diagonal direction of the northeast, the controller 130 may control the display 120 to display the feedback UI on the right face and an upper face of the first display item.

Further, when the input device is rotated while the point indicated by the input device is maintained in the display item, the controller 130 may control the display 120 to display the feedback UI on the four faces of the first display item.

In particular, the controller 130 may control the display 120 to increase a size of the feedback UI as a motion value of the input device is getting increased. That is, the controller 130 may determine that the larger the size of the calculated direction vector, the larger the motion amount of the input device, thereby increasing the size of the feedback UI.

Further, when the point indicated by the input device is moved from the first display item beyond the preset value, the controller 130 may remove the feedback UI and control the display 120 to move the highlight to a second display item positioned at the motion direction of the input device from the first display item. For example, when the input device is moved to the northeast and then the point indicated by the input device is separated from the first display item beyond the preset value, the controller 130 may remove the feedback UI and control the display 120 to move the highlight from the first display item to the second display item positioned at the northeast.

Meanwhile, when a point indicated by an input device according to another exemplary embodiment of the present invention is positioned within a preset distance on one of four faces of a display screen, the controller 130 may control the display 120 to display a page changing UI on the face positioned in the preset distance. Further, when the point indicated by the input device contacts one of the four faces of the display screen, the controller 130 may change a page to a corresponding direction of the face that the point indicated by the input device contacts.

By using the display device as described above, the user may more intuitively control the display device through the feedback UI and the page changing UI.

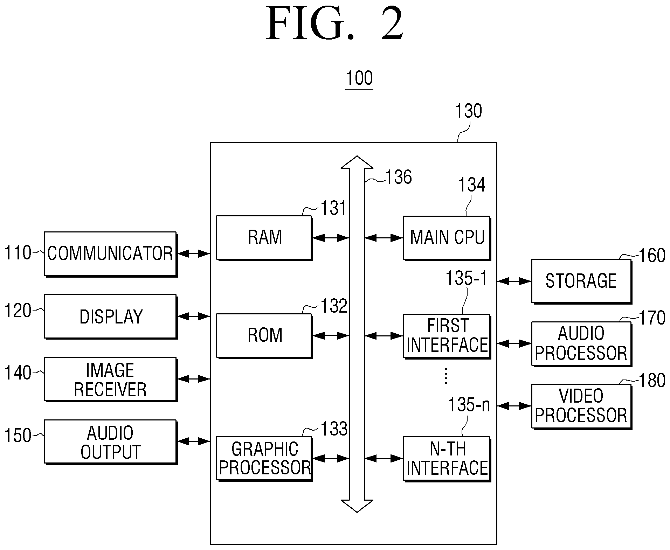

Hereinafter, the display device will be described in more detail with reference to FIGS. 2 to 7C.

FIG. 2 is a block diagram illustrating a configuration of the display device 100 according to the exemplary embodiment of the present invention. As illustrated in FIG. 2, the display device 100 includes the communicator 110, the display 120, the controller 130, an image receiver 140, an audio output 150, a storage 160, an audio processor 170, and a video processor 180.

The communicator 110 is configured to communicate with various types of external devices according to various types of communication schemes. The communicator 110 may include various communication chips such as a Wi-Fi chip, a Bluetooth chip, a near field communication (NFC) chip, a wireless communication chip, an IR chip, and the like. Here, the Wi-Fi chip, the Bluetooth chip, the NFC chip, and the IR chip each perform communication in a Wi-Fi scheme, a Bluetooth scheme, an NFC scheme, and an IR scheme. Among those, the NFC chip means a chip operated in a near field communication (NFC) scheme using a band of 13.56MHz among various RF-ID frequency bands such as 135kHz, 13.56MHz, 433MHz, 860 to 960MHz, and 2.45GHz. In the case of using the Wi-Fi chip or the Bluetooth chip, various types of connection information such as an SSID and a session key are first transmitted and received to perform communication connection, and then various types of information may be transmitted and received. The wireless communication chip means a chip performing communication depending on various communication protocols such as IEEE, Zigbee, 3rd generation, 3rd generation partnership project (3GPP), long term evolution (LTE), and the like.

In particular, the communicator 110 may perform the communication with the external input devices to receive the motion information (or coordinates information) and the button select command from the input device. Meanwhile, the input device may be the remote controller including the motion sensor that may sense the user motion, which is only an example. Therefore, the input device may be implemented as other input devices (for example, pointing device) including the motion sensor that may sense the user motion.

The display 120 displays image data received by the image receiver 140, a video frame processed by the video processor 180, and at least one of various screens generated from the graphic processor 133. In particular, the display 120 may display a plurality of display items and may display a highlight on one of the plurality of display items.

The image receiver 140 receives image data through various sources. For example, the image receiver 140 may receive broadcasting data from an external broadcasting station and receive the image data from external devices (for example, DVD device).

The audio output 150 is a component for outputting various alarm sounds or voice messages in addition to various audio data processed by the audio processor 170.

The storage 160 stores various modules for driving the display device 100. For example, the storage 160 may store softwares including a base module, a sensing module, a communication module, a presentation module, a web browser module, and a service module. In this case, the base module is a basic module that processes signals transferred from each hardware included in the display device 100 and transfers the processed signals to an upper layer module. The sensing module is a module collecting information from various sensors and analyzing and managing the collected information and may include a face recognizing module, an audio recognizing module, a motion recognizing module, an NFC recognizing module, and the like. The presentation module is a module for configuring a display screen and may include a multimedia module for playing and outputting multimedia contents and an UI rendering module for performing UI and graphic processing. The communication module is a module for performing communication with the outside. The web browser module is a module for performing web browsing to access a web server. The service module is a module including various applications for providing various services.

As described above, the storage 160 may include various program modules some of which may be omitted, changed, or added according to a kind and characteristics of the display device 100. For example, when the display device 100 is implemented as a tablet PC, the base module may further include a position determination module for determining a GPS based location and the sensing module may further include the sensing module for sensing an operation of a user.

Further, the storage 160 may store various modules for manipulating the highlight depending on the motion direction of the input device and providing the feedback UI.

The audio processor 170 is a component for performing processing on audio data. The audio processor 170 may perform various processings, such as decoding, amplification, and noise filtering, on the audio data. The audio data processed by the audio processor 170 may be output to the audio output 150.

The video processor 180 is a component for processing image data received by the image receiver 140. The video processor 180 may perform various image processings, such as decoding, scaling, noise filtering, frame rate conversion, and resolution conversion, on the video data.

The controller 130 controls the general operations of the display device 100 by using various programs stored in the storage 160.

As illustrated in FIG. 2, the controller 130 includes an RAM 131, an ROM 132, a graphic processor 133, a main CPU 134, first to n-th interfaces 135-1 to 135-n, and a bus 136. In this case, the RAM 131, the ROM 132, the graphic processor 133, the main CPU 134, the first to n-th interfaces 135-1 to 135-n, and the like may be connected to each other via the bus 136.

A set of commands for system booting, and the like is stored in the ROM 132. When a turn on command is input and thus power is supplied, the main CPU 134 copies an O/S stored in the storage 160 to the RAM 131 according to the command stored in the ROM 132 and executes the O/S to boot the system. When the booting is completed, the main CPU 134 copies various application programs stored in the storage 160 to the RAM 131 and executes the application programs copied to the RAM 131 to perform various operations.

The graphic processor 133 uses an operator (not illustrated) and a renderer (not illustrated) to create a screen including various objects such as a pointer, an icon, an image, and a text. The operator uses the control command received from the input to operate attribute values, such as coordinates, forms, sizes, and colors in which each object will be displayed according to a layout of the screen. The renderer generates a screen of various layouts including objects based on the attribute values that are operated by the operator. The screen generated by the renderer is displayed in a display region of the display 120.

The main CPU 134 accesses the storage 160 to perform booting using the O/S stored in the storage 160. Further, the main CPU 134 performs various operations using various programs, contents, data, and the like that are stored in the storage 160.

The first to n-th interfaces 135-1 to 135-n are connected to the foregoing various components. One of the interfaces may be a network interface which is connected to the external devices through a network.

In particular, the controller 130 obtains the coordinates of the point indicated by the input device based on the information received through the communicator 110. In particular, when the motion information of the input device is received from the input device, the controller 130 may calculate the coordinates based on the motion information received from the input device. Further, the controller 130 may receive information on the coordinates of the point indicated by the input device from the input device.

Further, the controller 130 may control the display 120 to display the highlight on the first display item positioned at the coordinates. In this case, the controller 130 may not display the pointer at the coordinates of the point indicated by the input device. However, this is only an example and the pointer may be displayed at the point indicated by the input device. In this case, the pointer may be displayed translucently.

When the point indicated by the input device is moved, the controller 130 may use the obtained coordinates and the coordinates of the moved point to determine the motion direction of the input device. In detail, the controller 130 may set the existing obtained coordinates of the point as a starting point and the coordinates of the moved point as an ending point to calculate the direction vector connecting between the starting point and the ending point.

Further, the controller 130 may determine the direction of the direction vector to determine the motion direction of the input device. In this case, the controller 130 may determine the motion direction of the input device as one of the up, down, left, and right directions and the four diagonal directions (northeast direction, northwest direction, southeast direction, southwest direction). The controller 130 may move the highlight in a direction corresponding to the determined motion direction of the input device.

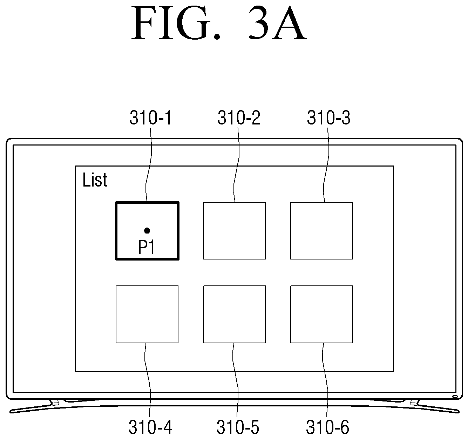

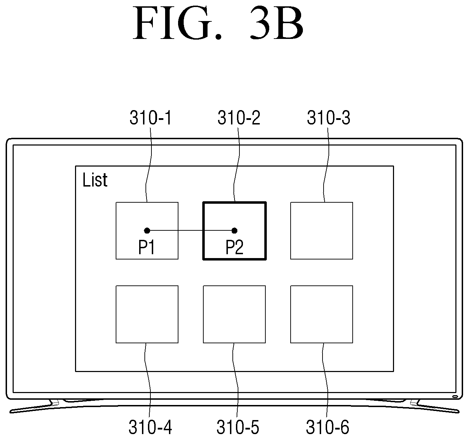

For example, as illustrated in FIG. 3A, when the input device displays point P1 while the quadrangular first display item to sixth display item 310-1 to 310-6 are displayed, the controller 130 may control the display 120 to display the first display item 310-1. Further, as illustrated in FIG. 3B, when the point indicated by the input device is moved to the P2, the controller 130 may calculate the direction vector using coordinates P1 and P2 and determine the right, which is the direction of the direction vector, as the motion direction of the input device. Further, as illustrated in FIG. 3B, the controller 130 may control the display 120 to move the highlight to the second display item 310-2 positioned at the right of the first display item 310-1.

In particular, when the motion direction of the input device is determined as a diagonal, the controller 130 may directly move the display items positioned at the up, down, left, and right directions to the display item positioned at the diagonal direction.

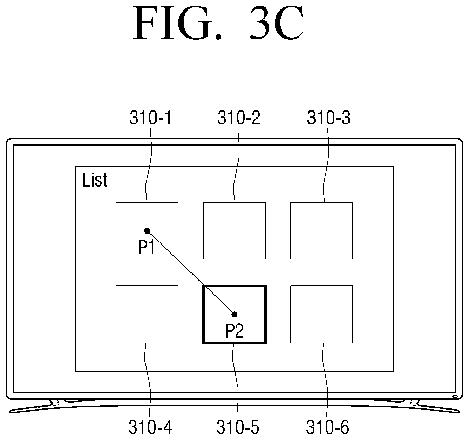

For example, as illustrated in FIG. 3A, when the input device displays the point P1 while the first display item to sixth display item 310-1 to 310-6 are displayed, the controller 130 may control the display 120 to display the first display item 310-1. Further, as illustrated in FIG. 3C, when the point indicated by the input device is moved to the P2, the controller 130 may calculate the direction vector using coordinates P1 and P2 and determine the southeast, which is the direction of the direction vector, as the motion direction of the input device. Further, as illustrated in FIG. 3C, the controller 130 may control the display 120 to directly move the highlight to the fifth display item 310-5 positioned at the southeast of the first display item 310-1.

Meanwhile, the foregoing exemplary embodiment describes that the highlight is directly moved depending on the motion direction of the input device, which is only an example. Therefore, the feedback UI may be displayed in the display item depending on the motion direction of the input device to guide the motion direction of the input device to the user.

In detail, the controller 130 may control the display 120 to display the feedback UI in the region of the first display item corresponding to the determined motion direction of the input device. In this case, when the point indicated by the input device is present within the preset distance from each face of the first display item, the controller 130 may control the display 120 to display the feedback UI. That is, when the point indicated by the input device is positioned in a central region of the first display item, the controller 130 may control the display 120 not to display the feedback UI but when the point indicated by the input device is positioned near each face of the first display item, control the display 120 to display the feedback UI.

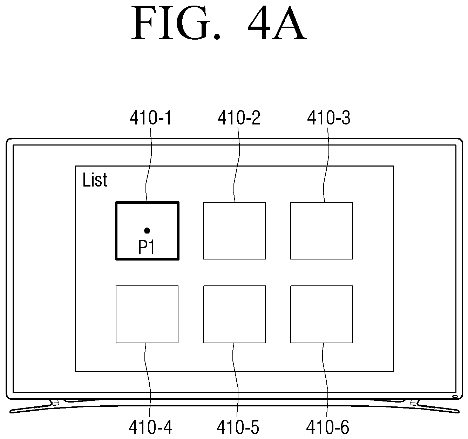

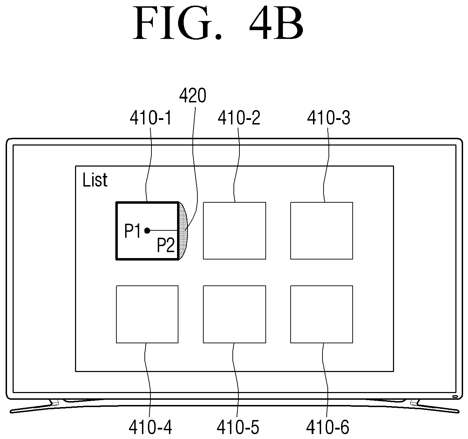

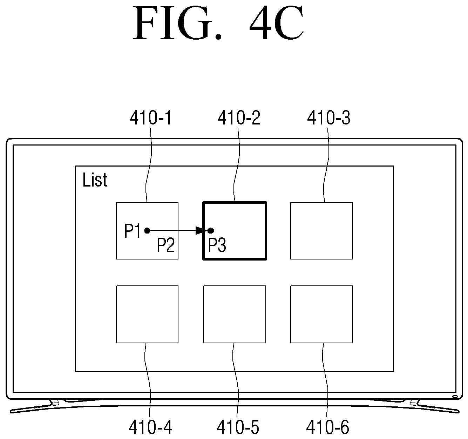

In particular, when the determined motion direction of the input device corresponds to one of up, down, left, and right directions, the controller 130 may control the display 120 to display the feedback UI on the face corresponding to the motion direction of the input device among four faces of the first display item. For example, as illustrated in FIG. 4A, when the input device indicates the point P1 while first display item to sixth display item 410-1 to 410-6 are displayed, the controller 130 may control the display 120 to display the highlight on the first display item 410-1. Further, when the input device is moved to the point P2, the controller 130 may use the coordinates P1 and P2 to determine the motion direction of the input device as the right. Further, as illustrated in FIG. 4B, the controller 130 may control the display 120 to display an arched feedback UI 420 on the right face of the first display item 410-1 depending on the determined result. Further, when the point indicated by the input device is moved to the point P3 separated from the first display item 410-1 beyond the preset value, the controller 130 may remove the feedback UI and control the display 120 to move the highlight to the second display item 410-2 positioned at the right direction of the first display item 410-1.

Meanwhile, the foregoing exemplary embodiment describes that the motion direction of the input deice is the right, which is only an example. Therefore, the example in which the motion direction of the input device is other directions such as left, up, and down directions may also be included in the technical idea of the present invention.

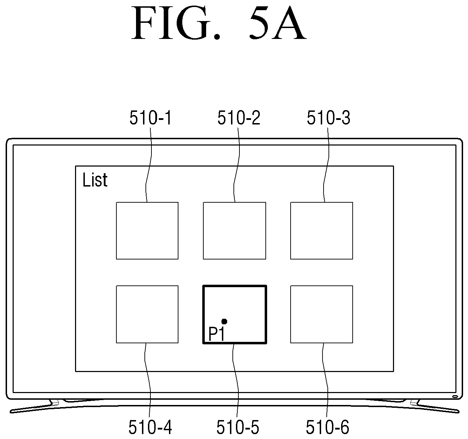

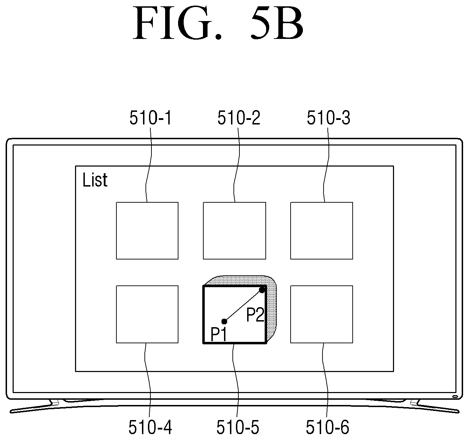

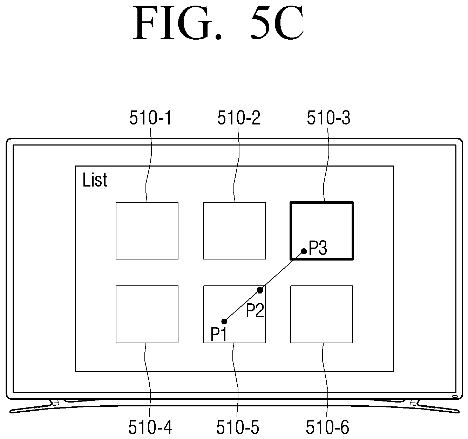

Further, when the determined motion direction of the input device is a diagonal direction, the controller 130 may control the display 120 to display the feedback UI on two faces corresponding to the motion direction of the input device among four faces of the first display item. For example, as illustrated in FIG. 5A, when the input device indicates the point P1 while first display item to sixth display item 510-1 to 510-6 are displayed, the controller 130 may control the display 120 to display the highlight on the fifth display item 510-5. Further, when the input device is moved to the point P2, the controller 130 may use the coordinates P1 and P2 to determine the motion direction of the input device as the northeast. Further, as illustrated in FIG. 5B, the controller 130 may control the display 120 to display an arched feedback UI 520 on the right face and the upper face of the fifth display item 510-5 depending on the determined result. Further, when the point indicated by the input device is moved to the point P3 separated from the fifth display item 510-5 beyond the preset value, the controller 130 may remove the feedback UI and control the display 120 to move the highlight to the third display item 510-3 positioned at the northeast direction of the fifth display item 510-5.

Meanwhile, the foregoing exemplary embodiment describes that the motion direction of the input device is the northeast, which is only an example. Therefore, the example in which the motion direction of the input device is other diagonal directions such as the northwest, the southeast, and the southwest may also be included in the technical idea of the present invention.

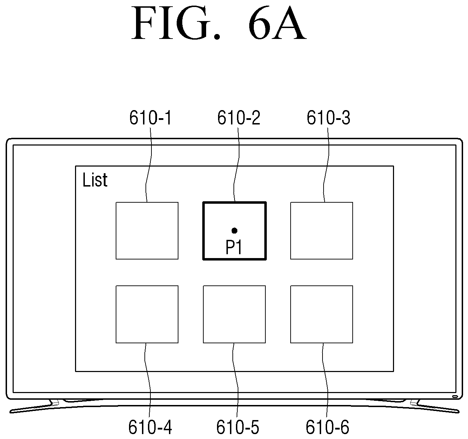

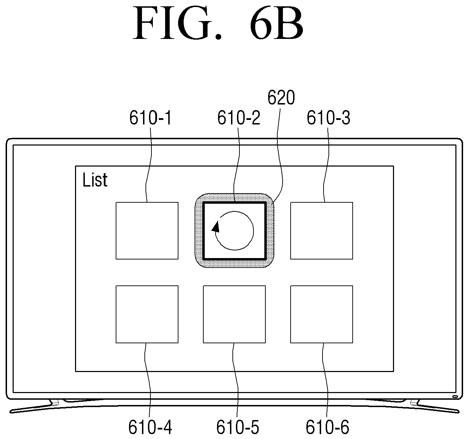

Further, when the input device is rotated while the point indicated by the input device is maintained in the display item, the controller 130 may control the display 120 to display the feedback UI on the four faces of the first display item. For example, as illustrated in FIG. 6A, when the input device indicates the point P1 while first display item to sixth display item 610-1 to 610-6 are displayed, the controller 130 may control the display 120 to display the highlight on the second display item 610-2. Further, when the point indicated by the input device is rotated while being maintained in the second display item 610-2, as illustrated in FIG. 6B, the controller 130 may control the display 120 to display the feedback UI on four faces of the second display item 610-2. In this case, the controller 130 may provide the visual effect that the feedback UIs displayed on the four faces seem to be waving depending on the rotation of the input device.

Meanwhile, the controller 130 may control the display 120 to increase a size of the feedback UI as a motion value of the input device is getting increased. In detail, the controller 130 may use the calculated size of the direction vector to determine the motion value of the input device and control the display 120 to increase the size of the feedback UI as the motion value is getting larger. By doing so, the user may determine the motion amount of the input device based on the increase and decrease in the size of the feedback UI.

According to another exemplary embodiment of the present invention, the controller 130 may control the display 120 to increase the size of the feedback UI as the point indicated by the input device is moved from the central region of the display item to the edge region thereof. That is, when the point indicated by the input device is positioned at the point separated from the central point of the display item by the preset distance, the controller 130 may control the display 120 to display the feedback UI and increase the size of the feedback UI as the point indicated by the input device gradually approaches the line of the display item.

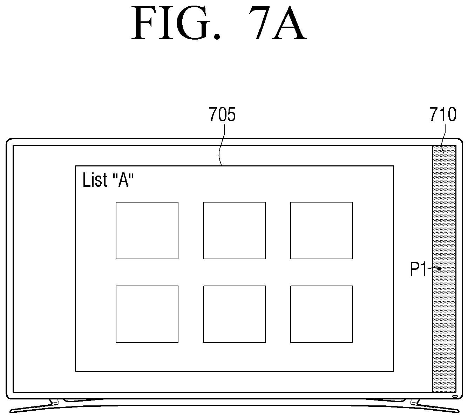

Meanwhile, according to another exemplary embodiment of the present invention, when a point indicated by an input device is positioned within a preset distance on one of four faces of a display screen, the controller 130 may control the display 120 to display a page changing UI on the face positioned in the preset distance. For example, when the point P1 indicated by the input device is positioned within the preset distance on the right face of the display screen while a "A" list 705 is displayed, as illustrated in FIG. 7A, the controller 130 may control the display 120 to display a bar-shaped page changing UI 710.

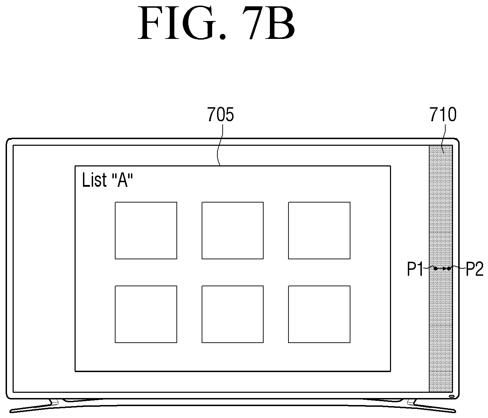

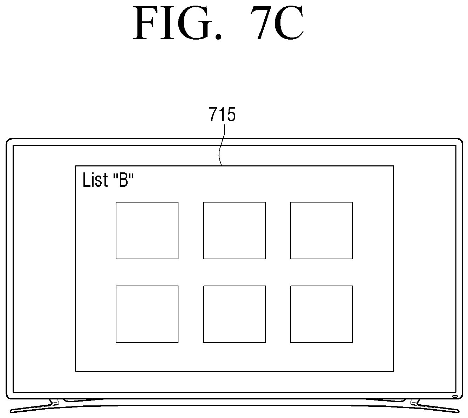

Further, when the point indicated by the input device contacts one of the four faces of the display screen, the controller 130 may change a page to a corresponding direction of the face that the point indicated by the input device contacts. In detail, as illustrated in FIG. 7B, when the point indicated by the input device is moved from the P1 to the P2 to contact the right face of the display screen, as illustrated in FIG. 7C, the controller 130 may control the display 120 to display a "B" list that is a next list of the "A" list 705 displayed in the current page.

As described above, by providing the feedback UI and the feedback change UI in the state in which the pointer is not displayed, the user may intuitively determine the motion of the input device to more accurately perform the manipulation.

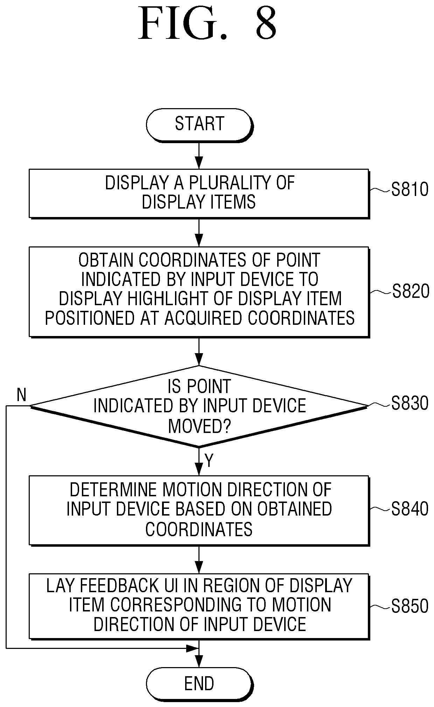

Hereinafter, a method for controlling a display device according to an exemplary embodiment of the present invention will be described with reference to FIG. 8.

First, the display device 100 displays the plurality of display items (S810). In this case, the plurality of display items may be a quadrangular shape, which is only an example. Therefore, the plurality of display items may have other shapes.

Further, the display device 100 obtains the coordinates of the point indicated by the input device to display the highlight on the display item positioned at the obtained coordinates (S820). In this case, the display device 100 may directly obtain the coordinates from the input device, which is only an example. Therefore, the display device 100 may obtain the motion information from the input device to calculate the coordinates.

Further, the display device 100 determines whether the point indicated by the input device is moved (S830).

When the point indicated by the input device is moved (S830-Y), the display device 100 uses the obtained coordinates to determine the motion direction of the input device (S840). In detail, the display device 100 may use the existing obtained coordinates and the coordinates of the moved point to calculate the direction vector and use the calculated direction vector to determine the motion direction of the input device.

Further, the display device 100 displays the feedback UI in the region of the display item corresponding to the motion direction of the input device (S850). In detail, as described with reference to FIGS. 4A to 6B, the display device 100 may display the feedback UI depending on the motion direction of the input device.

By the method for controlling a display device 100 as described above, the user may intuitively determine the motion of the input device to more accurately manipulate the display device 100.

Meanwhile, the method for controlling a display device according to various exemplary embodiments of the present invention described above may be implemented by a program and be provided to the display device or the input device. Particularly, a program including the method for controlling a display device may be stored in a non-transitory computer readable medium and provided.

The non-transitory computer readable medium is not a medium that stores data therein for a while, such as a register, a cache, a memory, or the like, but means a medium that semi-permanently stores data therein and is readable by a device. In detail, various applications or programs described above may be stored and provided in the non-transitory computer readable medium such as a compact disk (CD), a digital versatile disk (DVD), a hard disk, a Blu-ray disk, a universal serial bus (USB), a memory card, a read only memory (ROM), or the like.

### [DRAWINGS]

FIG. 1
   110: COMMUNICATOR
   130: CONTROLLER
   120: DISPLAY
FIG. 2
   110: COMMUNICATOR
   120: DISPLAY
   140: IMAGE RECEIVER
   150: AUDIO OUTPUT
   133: GRAPHIC PROCESSOR
   134: MAIN CPU
   135-1: FIRST INTERFACE
   135-N: N-TH INTERFACE
   160: STORAGE
   170: AUDIO PROCESSOR
   180: VIDEO PROCESSOR
FIG. 8
   START
   S810: DISPLAY A PLURALITY OF DISPLAY ITEMS
   S820: OBTAIN COORDINATES OF POINT INDICATED BY INPUT DEVICE TO DISPLAY HIGHLIGHT OF DISPLAY ITEM POSITIONED AT ACQUIRED COORDINATES
   S830: IS POINT INDICATED BY INPUT DEVICE MOVED?
   S840: DETERMINE MOTION DIRECTION OF INPUT DEVICE BASED ON OBTAINED COORDIATES
   S850: DISPLAY FEEDBACK UI IN REGION OF DISPLAY ITEM CORRESPONDING TO MOTION DIRECTION OF INPUT DEVICE END

## Claims

1. A method for controlling a display device (100), comprising:
displaying a plurality of display items (410-1 to 410-6) on a display screen;
obtaining coordinates of a position (P1) indicated by an input device;
displaying a highlight on a first display item (410-1) which is provided on the coordinates;
determining a motion direction of the input device based on the obtained coordinates and coordinates of a moved position (P2) received from the input device;
displaying, in addition to the highlight, a feedback UI (420) on an outline, only on an outside of the first display item (410-1), corresponding to the motion direction;
based on the moved position (P2) being positioned at a preset distance from a central point of the first display item, increasing the size of the feedback UI (420) as the moved position (P2) approaches the outline of the first display item; and
based on the moved position being positioned beyond a preset distance from the first display item, deleting the feedback UI on the display screen and displaying the highlight on a second display item (410-2) corresponding to the motion direction of the input device.

2. The method as claimed in claim 1, wherein
in the displaying of the feedback UI (420), when the determined motion direction of the input device corresponds to one of up, down, left, and right directions, the feedback UI is displayed on a side corresponding to the motion direction of the input device among four sides of the first display item.

3. The method as claimed in claim 1, wherein
in the displaying of the feedback UI (420), when the determined motion direction of the input device is a diagonal direction, the feedback UI (420) is displayed on two sides corresponding to the motion direction of the input device among four sides of the first display items (510-5).

4. The method as claimed in claim 1, wherein
in the displaying of the feedback UI (620), when the input device is rotated while the position (P1) indicated by the input device is maintained in the display item (610-2), the feedback UI (620) is displayed on four sides of the first display item (610-2).

5. The method as claimed in claim 1, wherein
in the displaying of the feedback UI (420), the larger the motion value of the input device, the larger the size of the feedback UI (420).

6. The method as claimed in claim 1, wherein
in the determining, a direction vector is calculated based on the obtained coordinates and the coordinates of the moved position (P2) and then the motion direction of the input device is determined based on the direction vector.

7. The method as claimed in claim 1, further comprising:
when the position (P1) indicated by the input device is positioned within a preset distance on one of four sides of the display screen, displaying a page changing UI (710) on the side positioned within the preset distance.

8. The method as claimed in claim 7, further comprising:
when the position (P1) indicated by the input device contacts one of the four sides of the display screen, changing a page to a direction corresponding to the side contacting the position indicated by the input device.

9. The method as claimed in claim 1, wherein
the input device is a remote controller including a motion sensor sensing a user motion.

10. A display device (100), comprising:
a display (120) configured to displaying a plurality of display items on a display screen;
a communicator (110); and
a controller (130) configured to:
obtain coordinates of a position on the display screen indicated by an external input device based on information received from the input device through the communicator (110),
control the display (120) to display a highlight on a first display item (410-1) provided on the coordinates, and
determine a motion direction of the input device based on the obtained coordinates and coordinates of a moved position (P2) received from the input device,
wherein:
the controller (130) is configured to control the display (120) to display in addition to the highlight, a feedback UI (420) on an outline, only on an outside of the first display item (410-1), corresponding to the motion direction of the input device,
based on the moved position (P2) being positioned at a preset distance from a central point of the first display item, increase the size of the feedback UI (420) as the moved position (P2) approaches the outline of the first display item; and
based on the moved position being positioned beyond a preset distance from the first display item, delete the feedback UI on the display screen and display the highlight on a second display item (410-2) corresponding to the motion direction of the input device.

11. The display device (100) as claimed in claim 10, wherein when the determined motion direction of the input device corresponds to one of up, down, left, and right directions, the controller (130) is configured to control the display (120) to display the feedback UI (420) on a side corresponding to the motion direction of the input device among four sides of the first display items (410-1).

12. The display device (100) as claimed in claim 10, wherein when the determined motion direction of the input device is a diagonal direction, the controller (130) is configured to control the display (120) to display the feedback UI (520) on two sides corresponding to the motion direction of the input device among four sides of the first display items (510-1).

13. The display device (100) as claimed in claim 10, wherein when the input device is rotated while the position (P1) indicated by the input device is maintained in the display item (610-1), the controller (130) is configured to control the display (120) to display the feedback UI (620) on four sides of the first display item (610-1).

14. The display device (100) as claimed in claim 10, wherein the controller (130) is configured to control the display (120) to increase a size of the feedback UI (420) as a motion value of the input device is getting increased.

## Patentansprüche

1. Verfahren zum Steuern einer Anzeigevorrichtung (100), das Folgendes umfasst:
Anzeigen mehrerer Anzeigeelemente (410-1 bis 410-6) auf einem Anzeigeschirm;
Erhalten von Koordinaten einer Position (P1), die durch eine Eingabevorrichtung angegeben wird;
Anzeigen einer Hervorhebung auf einem ersten Anzeigeelement (410-1), das bei den Koordinaten bereitgestellt wird;
Bestimmen einer Bewegungsrichtung der Eingabevorrichtung anhand der erhaltenen Koordinaten und von Koordinaten einer bewegten Position (P2), die von der Eingabevorrichtung empfangen wird;
Anzeigen zusätzlich zu der Hervorhebung einer Rückkopplungs-UI (420) auf einem Umriss lediglich an einer Außenseite des ersten Anzeigeelements (410-1), die der Bewegungsrichtung entspricht;
anhand der Positionierung der bewegten Position (P2) innerhalb eines im Voraus eingestellten Abstands von einem Mittelpunkt des ersten Anzeigeelements Erhöhen der Größe der Rückkopplungs-UI (420), wenn sich die bewegte Position (P2) dem Umriss des ersten Anzeigeelements nähert; und
anhand der Positionierung der bewegten Position außerhalb eines im Voraus festgelegten Abstands von dem ersten Anzeigeelement Löschen der Rückkopplungs-UI auf dem Anzeigeschirm und Anzeigen der Hervorhebung auf einem zweiten Anzeigeelement (410-2), das der Bewegungsrichtung der Eingabevorrichtung entspricht.

2. Verfahren nach Anspruch 1, wobei
beim Anzeigen der Rückkopplungs-UI (420) dann, wenn die bestimmte Bewegungsrichtung der Eingabevorrichtung einer Aufwärts- oder Abwärts- oder Links- oder Rechts-Richtung entspricht, die Rückkopplungs-UI auf einer der vier Seiten des ersten Anzeigeelements, die der Bewegungsrichtung der Eingabevorrichtung entspricht, angezeigt wird.

3. Verfahren nach Anspruch 1, wobei
beim Anzeigen der Rückkopplungs-UI (420) dann, wenn die bestimmte Bewegungsrichtung der Eingabevorrichtung eine diagonale Richtung ist, die Rückkopplungs-UI (420) auf zwei von vier Seiten des ersten Anzeigeelements (510-5), die der Bewegungsrichtung der Eingabevorrichtung entsprechen, angezeigt wird.

4. Verfahren nach Anspruch 1, wobei
beim Anzeigen der Rückkopplungs-UI (620) dann, wenn die Eingabevorrichtung gedreht wird, während die durch die Eingabevorrichtung angegebene Position (P1) in dem Anzeigeelement (610-2) gehalten wird, die Rückkopplungs-UI (620) auf vier Seiten des ersten Anzeigeelements (610-2) angezeigt wird.

5. Verfahren nach Anspruch 1, wobei
beim Anzeigen der Rückkopplungs-UI (420) die Größe der Rückkopplungs-UI (420) umso größer ist, je größer der Bewegungswert der Eingabevorrichtung ist.

6. Verfahren nach Anspruch 1, wobei
beim Bestimmen ein Richtungsvektor anhand der erhaltenen Koordinaten und der Koordinaten der bewegten Position (P2) berechnet wird und dann die Bewegungsrichtung der Eingabevorrichtung anhand des Richtungsvektors bestimmt wird.

7. Verfahren nach Anspruch 1, das ferner Folgendes umfasst:
wenn die Position (P1), die durch die Eingabevorrichtung angegeben wird, innerhalb eines im Voraus eingestellten Abstands auf einer von vier Seiten des Anzeigeschirms positioniert ist, Anzeigen einer Seitenwechsel-UI (710) auf der Seite, die innerhalb des im Voraus eingestellten Abstands positioniert ist.

8. Verfahren nach Anspruch 7, das ferner Folgendes umfasst:
wenn die Position (P1), die durch die Eingabevorrichtung angegeben wird, mit einer der vier Seiten des Anzeigeschirms in Kontakt gelangt, Ändern einer Seite zu einer Richtung, die der Seite entspricht, die mit der durch die Eingabevorrichtung angegebenen Position in Kontakt ist.

9. Verfahren nach Anspruch 1, wobei
die Eingabevorrichtung eine Fernsteuerung ist, die einen Bewegungssensor enthält, der eine Anwenderbewegung erfasst.

10. Anzeigevorrichtung (100), die Folgendes umfasst:
eine Anzeige (120), die konfiguriert ist, mehrere Anzeigeelemente auf einem Anzeigeschirm anzuzeigen;
eine Kommunikationseinrichtung (110); und
eine Steuereinheit (130), die konfiguriert ist zum:
Erhalten von Koordinaten einer Position auf dem Anzeigeschirm, die durch eine externe Eingabevorrichtung angegeben wird, anhand von Informationen, die von der Eingabevorrichtung über die Kommunikationseinrichtung (110) empfangen werden,
Steuern der Anzeige (120), um eine Hervorhebung auf einem ersten Anzeigeelement (410-1), die bei den Koordinaten bereitgestellt wird, anzuzeigen, und
Bestimmen einer Bewegungsrichtung der Eingabevorrichtung anhand der erhaltenen Koordinaten und von Koordinaten einer bewegten Position (P2), die von der Eingabevorrichtung erhalten wird,
wobei:
die Steuereinheit (130) konfiguriert ist, die Anzeige (120) zu steuern, damit sie zusätzlich zu der Hervorhebung eine Rückkopplungs-UI (420) auf einem Umriss lediglich an einer Außenseite des ersten Anzeigeelements (410-1), die der Bewegungsrichtung der Eingabevorrichtung entspricht, anzeigt,
anhand der Positionierung der bewegten Position (P2) innerhalb eines im Voraus eingestellten Abstands von einem Mittelpunkt des ersten Anzeigeelements die Größe der Rückkopplungs-UI (420) zu erhöhen, wenn sich die bewegte Position (P2) dem Umriss des ersten Anzeigeelements nähert; und
anhand der Positionierung der bewegten Position außerhalb eines im Voraus eingestellten Abstands von dem ersten Anzeigeelement die Rückkopplungs-UI auf dem Anzeigeschirm zu löschen und die Hervorhebung auf einem zweiten Anzeigeelement (410-2), das der Bewegungsrichtung der Eingabevorrichtung entspricht, anzuzeigen.

11. Anzeigevorrichtung (100) nach Anspruch 10, wobei
dann, wenn die bestimmte Bewegungsrichtung der Eingabevorrichtung einer Aufwärts- oder Abwärts- oder Links- oder Rechts-Richtung entspricht, die Steuereinheit (130) konfiguriert ist, die Anzeige (120) zu steuern, damit sie die Rückkopplungs-UI (420) auf einer von vier Seiten des ersten Anzeigeelements (410-1), die der Bewegungsrichtung der Eingabevorrichtung entspricht, anzeigt.

12. Anzeigevorrichtung (100) nach Anspruch 10, wobei
dann, wenn die bestimmte Bewegungsrichtung der Eingabevorrichtung eine diagonale Richtung ist, die Steuereinheit (130) konfiguriert ist, die Anzeige (120) zu steuern, damit sie die Rückkopplungs-UI (520) auf zwei von vier Seiten des ersten Anzeigeelements (510-1), die der Bewegungsrichtung der Eingabevorrichtung entsprechen, anzeigt.

13. Anzeigevorrichtung (100) nach Anspruch 10, wobei dann, wenn die Eingabevorrichtung gedreht wird, während die durch die Eingabevorrichtung angegebene Position (P1) in dem Anzeigeelement (610-1) gehalten wird, die Steuereinheit (130) konfiguriert ist, die Anzeige (120) zu steuern, damit sie die Rückkopplungs-UI (620) auf vier Seiten des ersten Anzeigeelements (610-1) anzeigt.

14. Anzeigevorrichtung (100) nach Anspruch 10, wobei
die Steuereinheit (130) konfiguriert ist, die Anzeige (120) zu steuern, damit sie eine Größe der Rückkopplungs-UI (420) erhöht, wenn ein Bewegungswert der Eingabevorrichtung erhöht wird.

## Revendications

1. Procédé de commande d'un dispositif (100) d'affichage, comportant les étapes consistant à :
afficher une pluralité d'éléments (410-1 à 410-6) d'affichage sur un écran d'affichage ;
obtenir des coordonnées d'une position (P1) indiquée par un dispositif d'entrée ;
afficher une surbrillance sur un premier élément (410-1) d'affichage qui est placé sur les coordonnées ;
déterminer une direction de déplacement du dispositif d'entrée d'après les coordonnées obtenues et des coordonnées d'une position déplacée (P2) reçue en provenance du dispositif d'entrée ;
afficher, en plus de la surbrillance, une UI (420) de rétroaction sur un contour, uniquement à l'extérieur du premier élément (410-1) d'affichage, correspondant à la direction de déplacement ;
sur la base du fait que la position déplacée (P2) est positionnée à une distance prédéfinie d'un point central du premier élément d'affichage, augmenter la taille de l'UI (420) de rétroaction à mesure que la position déplacée (P2) s'approche du contour du premier élément d'affichage ; et
sur la base du fait que la position déplacée est positionnée au-delà d'une distance prédéfinie du premier élément d'affichage, supprimer l'UI de rétroaction sur l'écran d'affichage et afficher la surbrillance sur un deuxième élément (410-2) d'affichage correspondant à la direction de déplacement du dispositif d'entrée.

2. Procédé selon la revendication 1,
lors de l'affichage de l'UI (420) de rétroaction, lorsque la direction de déplacement déterminée du dispositif d'entrée correspond à une direction parmi le haut, le bas, la gauche et la droite, l'UI de rétroaction étant affichée d'un côté correspondant à la direction de déplacement du dispositif d'entrée parmi quatre côtés du premier élément d'affichage.

3. Procédé selon la revendication 1,
lors de l'affichage de l'UI (420) de rétroaction, lorsque la direction de déplacement déterminée du dispositif d'entrée est une direction diagonale, l'UI (420) de rétroaction étant affichée sur deux côtés correspondant à la direction de déplacement du dispositif d'entrée parmi quatre côtés des premiers éléments (510-5) d'affichage.

4. Procédé selon la revendication 1,
lors de l'affichage de l'UI (620) de rétroaction, lorsque le dispositif d'entrée est tourné tandis que la position (P1) indiquée par le dispositif d'entrée est maintenue dans l'élément (610-2) d'affichage, l'UI (620) de rétroaction étant affichée sur quatre côtés du premier élément (610-2) d'affichage.

5. Procédé selon la revendication 1,
lors de l'affichage de l'UI (420) de rétroaction, la taille de l'UI (420) de rétroaction étant d'autant plus grande que la valeur de déplacement du dispositif d'entrée est grande.

6. Procédé selon la revendication 1,
lors de la détermination, un vecteur de direction étant calculé d'après les coordonnées obtenues et les coordonnées de la position déplacée (P2), puis la direction de déplacement du dispositif d'entrée étant déterminée d'après le vecteur de direction.

7. Procédé selon la revendication 1, comportant en outre l'étape consistant :
lorsque la position (P1) indiquée par le dispositif d'entrée est positionnée en-deçà d'une distance prédéfinie sur un côté parmi quatre côtés de l'écran d'affichage, à afficher une UI (710) de changement de page du côté positionné en-deçà de la distance prédéfinie.

8. Procédé selon la revendication 7, comportant en outre l'étape consistant :
lorsque la position (P1) indiquée par le dispositif d'entrée touche un des quatre côtés de l'écran d'affichage, à changer une page vers une direction correspondant au côté touchant la position indiquée par le dispositif d'entrée.

9. Procédé selon la revendication 1,
le dispositif d'entrée étant une télécommande comprenant un capteur de déplacement détectant un mouvement d'utilisateur.

10. Dispositif (100) d'affichage, comportant :
un affichage (120) configuré pour afficher une pluralité d'éléments d'affichage sur un écran d'affichage ;
un communicateur (110) ; et
un moyen (130) de commande configuré pour :
obtenir des coordonnées d'une position sur l'écran d'affichage indiqué par un dispositif d'entrée externe d'après des informations reçues en provenance du dispositif d'entrée par l'intermédiaire du communicateur (110), commander l'affichage (120) afin d'afficher une surbrillance sur un premier élément (410-1) d'affichage placé sur les coordonnées, et déterminer une direction de déplacement du dispositif d'entrée d'après les coordonnées obtenues et des coordonnées d'une position déplacée (P2) reçue en provenance du dispositif d'entrée :
le moyen (130) de commande étant configuré pour commander l'affichage (120) afin d'afficher, en plus de la surbrillance, une UI (420) de rétroaction sur un contour, uniquement à l'extérieur du premier élément (410-1) d'affichage, correspondant à la direction de déplacement du dispositif d'entrée, sur la base du fait que la position déplacée (P2) est positionnée à une distance prédéfinie d'un point central du premier élément d'affichage, augmenter la taille de l'UI (420) de rétroaction à mesure que la position déplacée (P2) s'approche du contour du premier élément d'affichage ; et
sur la base du fait que la position déplacée est positionnée au-delà d'une distance prédéfinie du premier élément d'affichage, supprimer l'UI de rétroaction sur l'écran d'affichage et afficher la surbrillance sur un deuxième élément (410-2) d'affichage correspondant à la direction de déplacement du dispositif d'entrée.

11. Dispositif (100) d'affichage selon la revendication 10,
lorsque la direction de déplacement déterminée du dispositif d'entrée correspond à une direction parmi le haut, le bas, la gauche et la droite, le moyen (130) de commande étant configuré pour commander l'affichage (120) afin d'afficher l'UI (420) de rétroaction d'un côté correspondant à la direction de déplacement du dispositif d'entrée parmi quatre côtés des premiers éléments (410-1) d'affichage.

12. Dispositif (100) d'affichage selon la revendication 10,
lorsque la direction de déplacement déterminée du dispositif d'entrée est une direction diagonale, le moyen (130) de commande étant configuré pour commander l'affichage (120) afin d'afficher l'UI de rétroaction (520) sur deux côtés correspondant à la direction de déplacement du dispositif d'entrée parmi quatre côtés des premiers éléments (510-1) d'affichage.

13. Dispositif (100) d'affichage selon la revendication 10,
lorsque le dispositif d'entrée est tourné tandis que la position (P1) indiquée par le dispositif d'entrée est maintenue dans l'élément (610-1) d'affichage, le moyen (130) de commande étant configuré pour commander l'affichage (120) afin d'afficher l'UI (620) de rétroaction sur quatre côtés du premier élément (610-1) d'affichage.

14. Dispositif (100) d'affichage selon la revendication 10,
le moyen (130) de commande étant configuré pour commander l'affichage (120) afin d'augmenter une taille de l'UI (420) de rétroaction à mesure qu'une valeur de déplacement du dispositif d'entrée est augmentée.
